# EUROPÄISCHE PATENTANMELDUNG

(11) **EP 2 664 970 A1**
(43) Veröffentlichungstag der Anmeldung: **20.11.2013**
(21) Anmeldenummer: 12167960.9
(22) Anmeldetag: 15.05.2012
(51) Int. Cl.: G05B 15/02

(54) **Prozessleitsystem und Verfahren**

(71) Anmelder: ABB Research Ltd., 8050 Zürich (CH)
(72) Erfinder: Steiger, Olivier, 8032 Zürich (CH); Krippner, Peter, 76199 Karlsruhe (DE)
(74) Vertreter: ABB Patent Attorneys

(57) **Zusammenfassung**

Die vorliegenden Erfindung betrifft ein Prozessleitsystem (1) für eine Anlage (10) zur Herstellung und Verarbeitung metallischer Werkstoffe und umfasst Sensormittel (21,22;31,32;41,42) zur Erfassung von Sensordaten (Q₁;Q₂;Q₃), eine Recheneinheit (3), welche eingerichtet ist, die Sensordaten (Q₁;Q₂;Q₃) der Sensormittel (21,22;31,32;41,42) entgegen zu nehmen, allenfalls mit Sollwerten (S) zu vergleichen, und rechnerisch, allenfalls unter Berücksichtigung eines Vergleichsergebnisses, Steuersignale (A₁;A₂;A₃) zu erzeugen. Weiter sind Aktuationsmittel umfasst, welche über die Steuersignale (A₁;A₂;A₃) zur Betätigung der Anlage (10) ansteuerbar sind. Hierbei ist die Recheneinheit (3) eingerichtet, aus den Sensordaten (Q₁;Q₂;Q₃) Umgebungsdaten (P₁;P₂;P₃) aus einer Umgebung (11) der Anlage (10) zu erhalten; wobei diese Umgebung (11) von einem menschlichen Operator prinzipiell begehbar ist, während die Anlage (10) in Produktionsbetrieb ist. Die Umgebungsdaten (P₁;P₂;P₃) beruhen auf Messparametern, welche durch den Operator mittels seiner menschlichen Sinne erfassbar sind und der Recheneinheit (3) liegen vorbestimmte und auf der Erfahrung des Operators basierende Regeln vor, aufgrund welcher die Steuersignale (A₁;A₂;A₃) rechnerisch durch die Recheneinheit (3) aus durch die Umgebungsdaten (P₁;P₂;P₃) und die Sensordaten (Q₁;Q₂;Q₃) gebildeten Messdaten (Q₁;Q₂;Q₃;P₁;P₂;P₃) erzeugbar sind. Zudem betrifft die Erfindung ein Verfahren, welches dieses Prozessleitsystem verwendet.

## Beschreibung

### TECHNISCHES GEBIET

Die vorliegende Erfindung betrifft ein Prozessleitsystem für eine Anlage zur Herstellung und Verarbeitung metallischer Werkstoffe, insbesondere zur Stahlproduktion, gemäss dem Oberbegriff des Anspruchs 1 und ein Verfahren dazu.

### STAND DER TECHNIK

Die Produktion von Stahl erfolgt in einer Abfolge von oftmals komplexen Produktionsschritten, Schritte wie Roheisenherstellung, primäre und sekundäre Stahlherstellung, Giessen oder Heisswälzen. Um stets die gewünschte Produktqualität unter Einhaltung der Sicherheitsanforderungen zu gewährleisten, muss für jeden Produktionsschritt eine Vielzahl von Kontrollparametern anfangs richtig gesetzt und sodann den Umständen entsprechend nachgeregelt werden, wobei jeweils nur eine beschränkte Anzahl von Messgrössen aus der Anlage als Rückmeldung zur Verfügung stehen.

Bei der Herstellung von Stahl mittels eines Sauerstoffblasverfahrens (Linz-Donawtiz-Verfahren, BOS) ist es bspw. besonders wichtig, wie das Sauerstoffblasen, die Begichtung (das Chargieren) und das Abstechen durchgeführt werden.

Messdaten können bspw. durch folgende Messungen gewonnen werden: chemische Analysen oder Temperaturmessungen verwendeter Substanzen; Temperaturmessungen mittels in die Schmelze eingetauchter Thermoelemente; Messung der Rate, der Zusammensetzung und der Temperatur des Abgases; akustische Messungen oder Messung der Lanzenvibration zur Feststellung einer allfälligen Aufschäumung der Schlacke; Messung der Lanzenhöhe; Feststellung des Metallpegels und/oder des Schlackenpegels; präzise Gewichtsbestimmung von zugeführten oder abgeführten Substanzen und Kontrolle und Regulierung von Fluiden und Feststoffen (O₂, N₂, Erz, Kalk ...) und von der Flussrate und Temperatur des Haubenkühlwassers.

Es ist bekannt, ein automatisches Kontrollsystem, ein Prozessleitsystem, zur Überwachung des Herstellungsprozesses, sowie zur Durchführung von allfälligen Korrekturen einzusetzen. Zur Anpassung von Kontrollparametern in Abhängigkeit von zugänglichen Messgrössen greift das automatische Kontrollsystem bspw. auf statische, dynamische und/oder statistische Modelle zurück.

Diese Modelle sind mathematisch bspw. in einen Algorithmus kodifizierte Prozessnachbildungen. Diese oftmals nützlichen Modelle weisen jedoch einige Nachteile auf. Manche Modelle benötigen bspw. Messgrössen, welche nur schwer zugänglich sind (bspw. Oberflächengeschwindigkeit der Metallschmelze) oder gar nicht zugänglich sind (bspw. Zusammensetzung des Altmetalls). Zudem können üblicherweise bestimmte Reaktionen (bspw. plötzliches Aufschäumen im Schmelzofen) durch solche Modelle weder korrekt vorhergesagt noch mittels solcher beherrscht werden. Einem automatischen Prozessleitsystem liegen also nicht alle Daten vor, um die Anlage optimal zu regeln. Aus diesem Grunde ist im Regelfall ein erfahrender Arbeiter ergänzend zum automatischen Kontrollsystem zur Überwachung und Kontrolle des Prozesses notwendig. Dieser Operator hält sich normalerweise in einer begehbaren Umgebung der Produktionsanlage auf und beobachtet das Geschehen mit seinen menschlichen Sinnen und mit Blick auf die Messgeräte genau.

Der erfahrene Operator verlässt sich bei der Qualitätsprüfung und Problemsondierung insbesondere auch auf seine Sinne. So kann er bspw. eine Prozessbeurteilung aufgrund von sichtbaren Flammen, von fühlbaren Temperaturschwankungen oder Gerüchen in der Arbeitsumgebung oder aufgrund des Lärmemissionsspektrums oder des Vibrationsspektrums der Anlage oder deren Bestandteile durchführen. Zudem kann der Operator Informationen des Kontrollsystems (Gasdurchfluss, Temperaturen, etc.) berücksichtigen. Sobald ein Prozess aus dem Ruder läuft und der Operator dies bemerkt, bspw. über seinen Seh- oder Gehörsinn, kann er korrigierend in den Regelkreis der Anlage eingreifen. Ein solcher menschlicher Operator erhöht jedoch die Produktionskosten und seine Leistungsfähigkeit oder Arbeitsqualität schwankt (bspw. aufgrund von Müdigkeit oder Ablenkung).

Konsequenterweise hängt eine Qualität der mittels des menschlich überwachten Prozesses gewonnen Produkte von der Qualität der Arbeit des Operators, also auch von dessen Erfahrung, seiner Wachsamkeit oder allgemein seiner Arbeitsleistung ab. Ein Stahlwerk wird typischerweise im Schichtbetrieb geführt, womit durch eine Ablösung des überwachenden Arbeiters der Herstellungsprozess und damit auch die Produktqualität weiter beeinflusst wird. Es sind also unerwünschte und nachteilige Schwankungen in der Qualität feststellbar.

### DARSTELLUNG DER ERFINDUNG

Es ist eine Aufgabe der vorliegenden Erfindung, ein vollständig automatisiertes Prozessleitsystem zur Überwachung und Regelung eines bis anhin zumindest teilweise menschlich überwachten und kontrollierten Prozesses bereitzustellen.

Es ist ein Ziel der vorliegenden Erfindung, die erwähnten Schwankungen aufgrund unterschiedlicher Arbeitsleistungen verschiedener menschlicher Operatoren zu eliminieren. Sodann wird der Prozess leichter voraussagbar, ist leichter kontrollierbar und daher noch geeigneter, um von einem automatischen Prozessleitsystem geführt zu werden.

Zudem ist es ein weiteres Ziel, die Qualität des Herstellungsverfahrens und damit auch die Qualität des Verfahrensprodukts zu maximieren.

Diese und weitere Aufgaben und Ziele werden mittels eines Prozessleitsystems gemäss dem Oberbegriff des Anspruchs 1 mit den kennzeichnenden Merkmalen des Anspruchs 1 und durch ein Verfahren gemäss dem Oberbegriff des Anspruchs 11 mit den kennzeichnenden Merkmalen des Anspruchs 11 gelöst und erreicht.

Damit wird erreicht, dass die Produktionskosten gesenkt, die Qualität von Prozess und Endprodukt verbessert und vorhersagbarer gemacht, die Sicherheit durch Eliminierung menschlicher Fehler erhöht und die Abhängigkeit von erfahrenen Operatoren minimiert werden.

Das Prozessleitsystem gemäss der vorliegenden Erfindung ist also ein Prozessleitsystem für eine Anlage zur Herstellung und Verarbeitung metallischer Werkstoffe, insbesondere zur Stahlproduktion und umfasst:
Sensormittel zur Erfassung von Sensordaten im Zusammenhang mit der Herstellung und Verarbeitung metallischer Werkstoffe;
eine Recheneinheit, welche eingerichtet ist, die Sensordaten der Sensormittel entgegen zu nehmen und vorzugsweise mit Sollwerten zu vergleichen und rechnerisch, vorzugsweise aufgrund eines Vergleichsergebnisses, Steuersignale zu erzeugen;
   und Aktuationsmittel, welche über die Steuersignale zur Betätigung der Anlage ansteuerbar sind; wobei das Prozessleitsystem dadurch gekennzeichnet ist,
   dass die Recheneinheit eingerichtet ist, aus den Sensordaten Umgebungsdaten aus einer Umgebung der Anlage zu erhalten;
   wobei diese Umgebung von einem menschlichen Operator prinzipiell begehbar ist, während die Anlage im Produktionsbetrieb ist;
   wobei die Umgebungsdaten auf Messparametern beruhen, welche durch den Operator mittels seiner menschlichen Sinne erfassbar sind;
   und wobei der Recheneinheit vorbestimmte und auf der Erfahrung des Operators basierende Regeln vorliegen, aufgrund welcher die Steuersignale rechnerisch durch die Recheneinheit aus durch die Umgebungsdaten und die Sensordaten gebildeten Messdaten erzeugbar sind.

Hierbei sind die Sollwerte von einem Fachmann spezifisch für die Anlage vorgegebene Werte, wobei der Vergleich von Sensordaten mit Sollwerten bspw. einen paarweisen Vergleich von Sensordaten eines einzelnen Sensors mit einem vordefinierten Sollwert für diesen Sensor oder bspw. einen Vergleich von aus ausgewählten Sensordaten gebildeten Vergleichswerten mit für diese Vergleichswerte vorgesehenen Sollwerten umfassen kann. Die Aktuationsmittel sind Mittel, welche die Steuersignale entgegen nehmen und einen betreffenden Teil der Anlage regeln. Also bspw. kann ein Netzgerät einer Elektrode, welche über einen Lichtbogen die Schmelze im Hochofen heizt, ein solches Aktuationsmittel sein. Dieses Netzgerät kann also ausgestaltet sein, die Steuersignale zu empfangen und die Heizleistung aufgrund des empfangenen Steuersignals zu regulieren. Dass die Recheneinheit eingerichtet ist, aus den Sensordaten Umgebungsdaten aus einer Umgebung der Anlage "zu erhalten" ist hier so zu verstehen, dass die Umgebungsdaten der Recheneinheit entweder i) direkt von den Sensormitteln zur Verfügung gestellt werden oder ii) durch die Recheneinheit aufgrund von vorbestimmter Rechenregeln berechnet werden. Diese Rechenregeln werden dann durch einen Fachmann anlagenspezifisch bestimmt und der Recheneinheit programmierungstechnisch zur Verfügung gestellt.

Es ist somit möglich, dass die Sensormittel des Prozessleitsystems Messmittel zur Erfassung von mittels menschlicher Sinne erfassbarer Messparameter umfassen, wobei diese Messmittel eingerichtet sind, zumindest teilweise oder vollständig die besagten Umgebungsdaten aus der prinzipiell vom menschlichen Operator begehbaren Umgebung der Produktionsanlage messtechnisch zu erfassen und der Recheneinheit als Messdaten zur Verfügung zu stellen.

Die besagten Messmittel können hierbei ausgewählt sein aus der Gruppe bestehend aus: einer Kamera zur Detektion elektromagnetischer Strahlung, insbesondere von sichtbarem Licht, allenfalls von UV- oder Infrarotlicht; einem Mikrophon zur Detektion akustischer Signale, insbesondere von Schallwellen mit Frequenzen von etwa 20 Hertz bis 20 Kilohertz; einem Thermometer zur Messung einer Oberflächentemperatur oder einer Umgebungstemperatur, insbesondere von Temperaturen zwischen etwa -10 Grad Celsius und 100 Grad Celsius; und einem Beschleunigungssensor zur Detektion von Vibrationen der Anlage oder von durch die Anlage verursachten Vibrationen, insbesondere Vibrationen mit Frequenzen von etwa 0.05 Hertz bis 100 Kilohertz. Es kann natürlich eine Vielzahl solcher Messmittel an verschiedensten Orten vorgesehen sein. Somit ist die vorliegende Erfindung einem menschlichen Operator auch insoweit überlegen, als dieser zu einem Zeitpunkt nur in einer begehbaren Umgebung Sinneseindrücke sammeln kann, während dem erfindungsgemässen Prozessleitsystem aus vielen, vorzugsweise allen begehbaren Umgebungen solche Umgebungsdaten gleichzeitig vorliegen.

Es ist somit klar, dass das erfindungsgemässe Prozessleitsystem so ausgestaltet sein kann, dass es die Anlage beobachtet, wie ein Operator der sich permanent in allen vom Prozessleitsystem überwachten und begehbaren Umgebungen beobachtend aufhalten würde. Zudem liegen die Umgebungsdaten erfindungsgemäss elektronisch vor und sind damit prinzipiell auch speicherbar und bspw. zur späteren Prozessanalyse geeignet.

Der Operator berücksichtigt erfahrungsgemäss neben Information aus einem automatisierten Überwachungssystem im Speziellen also auch durch seine menschlichen Sinne erfassten und insbesondere auch durch die Grenzen seiner Sinneswahrnehmung begrenzten, in der Arbeitsumgebung herrschenden Parameter.

Es ist denkbar, dass vom Operator über seine Sinne wahrgenommenen Zustände der Anlage (oder von Teilen davon) bereits teilweise implizit in den Sensordaten vorhanden sind, von vom herkömmlichen Prozessleitsystem jedoch nicht isoliert und/oder anders interpretiert werden als vom menschlichen Operator. Das erfindungsgemässe Prozessleitsystem ist jedoch eingerichtet, die vom menschlichen Operator über seine Sinne wahrgenommen Einflüsse zu identifizieren (d.h. entweder direkt zu messen oder aber aus anderen Messdaten annähernd zu berechnen) und diese dann auf der Basis von vorbestimmten Operatorregeln in den Regelkreis einzuspeisen.

Als Beispiel sei hier die Temperatur im Aufenthaltsbereich des Operators genannt. Spürt der Operator über seine Haut eine Temperaturveränderung im Aufenthaltsbereich, so kann ihn dies veranlassen, über eine Kontrollkonsole die Sollwerte der Anlage anzupassen, also bspw. eine Temperatur im Hochofen zu ändern. Es ist hier wesentlich, dass dem erfindungsgemässen Prozessleitsystem die Temperaturdaten des Aufenthaltsbereichs vorliegen, weil die dortige Temperaturschwankung den Operator veranlasst hat, aktiv zu werden. Diese Temperaturdaten können durch einen Temperatursensor im Aufenthaltsbereich selbst oder durch eine Wärmekamera von ausserhalb gewonnen werden. Es ist jedoch auch möglich, diese Temperaturdaten aufgrund von Temperaturdaten von Temperatursensoren im Hochofen oder von anderen Orten selbst zu errechnen (dazu müssten bspw. der Recheneinheit dann die Daten des Sensors und der typische Temperaturgradient vorliegen).

Es ist also denkbar, dass die Sensormittel in einer prinzipiell vom menschlichen Operator nicht begehbaren Umgebung bereitgestellte Sensoren zur Erfassung von Sensordaten umfassen, wobei diese Sensordaten der Recheneinheit zur Verfügung stehen und die Recheneinheit eingerichtet ist, aus diesen Sensordaten die besagten Umgebungsdaten zumindest teilweise oder vollständig zu berechnen.

Es ist zudem denkbar, dass die Sensormittel weitere Sensoren zur Erfassung von weiteren Sensordaten umfassen, wobei diese weiteren Sensordaten dieser weiteren Sensoren der Recheneinheit dann vorzugsweise zumindest teilweise als weitere Messdaten zur Verfügung stehen und vorzugsweise aus einer vom menschlichen Operator nicht begehbaren Umgebung stammen, und dass die Recheneinheit eingerichtet ist, die Steuersignale für die Aktuationsmittel rechnerisch aufgrund der durch die Umgebungsdaten und die Sensordaten gebildeten Messdaten zu erzeugen.

Die Regeln (Operatorregeln) sind aufgrund der Erfahrung von erfahrenen menschlichen Operatoren bestimmt und durch einen Fachmann (bspw. als Algorithmus) ins erfindungsgemässe Prozessleitsystem implementiert worden (bspw. über Hartkodierung) oder durch eine künstliche Intelligenz des Prozessleitsystem von diesem selbst erlernt worden (s. unten). Vorbestimmte und auf der Erfahrung des Operators basierende Regeln sind also Regeln, welche aus den Verhaltensmustern von vorzugsweise einer Vielzahl von erfahrenen Operatoren von einem Fachmann oder rechentechnisch identifiziert werden und in der Recheneinheit des erfindungsgemässen Prozessleitsystems durch dieses verwendbar implementiert werden.

Die prinzipiell durch den menschlichen Operator begehbare Umgebung ist eine Umgebung der Anlage, in welcher sich der Operator zumindest zeitweise aufhält oder aufhalten könnte/würde, wobei er dabei Sinneseindrücke über seine menschlichen Sinne sammelt oder sammeln könnte/würde. Dies kann bspw. der Aufenthaltsraum in der Kontrollkabine des Operators sein. Insbesondere sind Bereiche, in welche ein Operator einem Kontrollgang durch die sich in Produktionsbetrieb befindliche Anlage gelangt und mittels seiner Sinne die Anlage kontrolliert, solche prinzipiell begehbaren Umgebungen. In diesen Umgebungen herrschen also Bedingungen, welche dem menschlichen Operator einen Aufenthalt (allenfalls in einer Schutzkleidung, welche die Sinneswahrnehmung von äusseren Eindrücken noch ermöglicht) erlauben, wobei er zumindest mit einem seiner Sinne (Sehsinn, Gehörsinn, Tastsinn, Geruchssinn, ev. der Geschmackssinn) Eindrücke über den Betriebszustand der Anlage sammelt.

Die prinzipiell nicht begehbare Umgebung der Anlage ist eine Umgebung, in welcher sich der menschliche Operator nicht aufhalten kann, da es die betriebsgemässen Bedingungen nicht erlauben. Ein solcher Bereich ist bspw. der Bereich im Hochofen, oder der Giess- oder Walzbereich, da dort bspw. sehr hohe Temperaturen (bspw. über 500°Celsius oder 1500°Celsius) herrschen. Aus diesen Bereichen kann der menschliche Operator nur indirekt auf eine begehbare Umgebung wirkende Parameter wahrnehmen. Mit seinem Gehirn kann er bspw. die Temperatur im Ofen aufgrund einer äusseren Wärmeentwicklung abschätzen. Er kann bspw. auch von aussen in den Ofen schauen. Der Ofenbereich wirkt dann also durch Aussendung der elektromagnetischen Strahlung auf den begehbaren Aufenthaltsbereich des Operators; diese Strahlung nimmt der Operator als Umgebungsdaten der begehbaren Umgebung wahr und ordnet diese dann erfahrungsgemäss dem Ofen zu.

Es soll nun anhand des Sehsinns des Operators noch ein erläuterndes Beispiel beschrieben werden, welches entsprechend auf die anderen Sinne des Operators verallgemeinerbar ist. Sieht also bspw. der erfahrene Operator aus einer begehbaren Umgebung eine zu helle Flammenfarbe im Ofen, so kann er erfahrungsgemäss die Energiezufuhr zum Ofen drosseln. Die vereinfachte Regel heisst hier dann, ist die Flammenfarbe zu hell, so soll die Energiezufuhr zum Hochofen gedrosselt werden. Es soll nun erfindungsgemäss die Lichteinwirkung auf diese begehbare Umgebung bspw. entweder mittels einer Kamera gemessen oder aufgrund von Temperatursensoren im Hochofen berechnet werden. Die Kamera oder die Temperatursensoren mit Umrechnung ersetzen also die Augen des Operators. Identifiziert nun das erfindungsgemässe Prozessleitsystem über die Sensormittel (allenfalls mit Umrechnung) eine Lichteinwirkung, welche den Operator veranlassen würde, die Energiezufuhr zu drosseln, so erzeugt die Recheneinheit aus diesen Lichtdaten anhand der vom Operator gelernten Regel ein Steuersignal, um die Energiezufuhr zu drosseln. Der Zeitablauf der Drosselung und deren Ausmass können ebenfalls in dieser Regel basierend auf Erfahrungswerten des Operators kodifiziert sein. Diese Regeln bilden also das Verhaltensmuster des Operators ab. Vorzugsweise werden diese Regeln nicht nur aus der Erfahrung eines einzelnen Operators, sondern aus der Erfahrung einer Vielzahl von Operatoren gebildet; man bildet also eine Art Mittelwert.

Der menschliche Experte (also der Operator) soll also durch ein erfindungsgemässes automatisiertes Prozessleitsystem ersetzt werden. Im Unterschied zu herkömmlichen Prozessleitsystemen verwendet das erfindungsgemässe Prozessleitsystem abgesehen von allfällig herkömmlichen Messparametern nun auch Umgebungsdaten, welche dem menschlichen Operator aufgrund seiner menschlichen Sinne vorliegend sind, also bspw. Umgebungsgeräusche und Umgebungstemperaturen, Vibrationen der Anlage, Flammenintensität und Flammenfarbe oder Gerüche.

Die Recheneinheit des erfindungsgemässen Prozessleitsystems kann weiter eingerichtet sein, anhand von Rechenmodellen aus den Messdaten Wahrscheinlichkeitswerte für ein Eintreten von möglichen Störfällen zu berechnen. Diese Modelle können hierbei statische, dynamische oder statistische Modelle sein, wie man sie aus dem Stand der Technik kennt. Zudem kann die Recheneinheit weiter eingerichtet sein, die Steuersignale rechnerisch aufgrund der Messdaten und der berechneten Wahrscheinlichkeitswerte zu erzeugen.

Das Prozessleitsystem ist zudem vorzugsweise eingerichtet, diese Wahrscheinlichkeitswerte bspw. über eine Display, bspw. auf einer Kontrolleinheit für den Operator oder einem Computer anzuzeigen.

Diese Kontrolleinheit umfasst eine erste Benutzerschnittstelle und ist eingerichtet, über diese erste Benutzerschnittstelle Kontrollanweisungen vom menschlichen Operator entgegenzunehmen und daraus Kontrollsignale zu erzeugen und diese Kontrollsignale dann zur Ansteuerung direkt den Aktuationsmitteln zu senden oder zumindest teilweise an die Recheneinheit zu senden. Die Recheneinheit ist weiter eingerichtet, die Steuersignale rechnerisch aufgrund sowohl der Messdaten, allenfalls einschliesslich der berechneten Wahrscheinlichkeitswerte, als auch der zugesendeten Kontrollsignale zu erzeugen. Es kann sich hierbei um logische (oder Fuzzy-logische) Verknüpfungen handeln; also bspw. wenn ein erster Sensor einen Sensorwert liefert, welcher grösser ist als ein erster vordefinierter Wert und ein zweiter Sensor einen Sensorwert liefert, welcher kleiner als eine zweiter vordefinierter Wert ist, dann soll ein bestimmter Aktuator in vordefinierter Weise betätigt werden. Diese Regeln können bspw. von Experten oder Operatoren selbst in die Recheneinheit einprogrammiert oder von einem neuronalen Netzwerk erfasst werden. Weiter ist es möglich, dass das Prozessleitsystem zusätzlich mindestens ein herkömmliches automatisches Kontrollsystem umfasst. Dieses Kontrollsystem ist hierbei eingerichtet, zumindest teilweise die weiteren Sensordaten der weiteren Sensoren entgegen zu nehmen und daraus mittels Modellrechnung einen Teil der Steuersignale bereitzustellen. Die Modellrechnungen basieren hierbei auf statischen, dynamischen oder statistischen Modellen, wie man sie aus dem Stand der Technik kennt.

Vorzugsweise kann die Recheneinheit zudem bspw. durch einen Operator aus einem Betriebsmodus in einen Lernmodus schaltbar sein, wobei das Prozessleitsystem im Lernmodus zumindest teilweise durch den Operator über die Kontrolleinheit und deren Kontrollsignale kontrollierbar ist. Hierbei ist die Recheneinheit weiter eingerichtet, diese Messdaten (allenfalls einschliesslich der Wahrscheinlichkeitswerte) und diese entgegen genommenen Kontrollsignalen einander jeweils zugeordnet abzuspeichern und aus diesen abgespeicherten Daten die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen zu bestimmen, wobei die Recheneinheit eingerichtet ist, die derart bestimmten Regeln dann abzuspeichern, sodass diese Regeln dann im Betriebsmodus durch die Recheneinheit verwendet werden können.

Das erfindungsgemässe Prozessleitsystem kann weiter dadurch gekennzeichnet sein, dass die Recheneinheit eingerichtet ist, im Lernmodus dem menschlichen Operator mehrmals jeweils von der Recheneinheit generierte oder aktuell gemessene oder durch die Recheneinheit allenfalls abgespeicherte Messdaten, allenfalls einschliesslich der entsprechenden Wahrscheinlichkeitswerte, vorzulegen. Dies kann bspw. über ein Display oder einen angeschlossenen Computer geschehen. Der Operator analysiert die Daten und gelangt zu einer Entscheidung, ob ein Kontrolleingriff notwendig ist, und wenn ja, welcher. Hierbei weist das Prozessleitsystem eine zweite Benutzerschnittstelle auf. Die Recheneinheit im Lernmodus ist dann weiter eingerichtet, aufgrund der jeweils vorgelegten Messdaten über die zweite Benutzerschnittstelle des Prozessleitsystems vom Operator getätigte simulierte Kontrollanweisungen des Operators entgegen zu nehmen und aus den simulierten Kontrollanweisungen simulierte Kontrollsignale zu erzeugen, wobei die Recheneinheit weiter eingerichtet ist, diese vorgelegten Messdaten, allenfalls einschliesslich der Wahrscheinlichkeitswerte, und diese simulierten Kontrollsignale einander jeweils zugeordnet abzuspeichern. Aus diesen jeweils abgespeicherten Daten kann die Recheneinheit dann die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen zu bestimmen. Dabei kann die Recheneinheit eingerichtet sein, diese bestimmten Regeln derart abzuspeichern, dass diese dann im Betriebsmodus durch die Recheneinheit verwendbar sind.

Eine vorteilhafte Weiterbildung des erfindungsgemässen Prozessleitsystems ist also, wenn das System von einem Betriebsmodus in einen Lernmodus schaltbar ist. Im Lernmodus können diese auf der Erfahrung des Operators basierenden Regeln aufgrund eines zur Verfügung stehenden Datensatzes (also von mehreren Lerndatensätzen, s. unten) vom Leitsystem selbst errechnet werden. Damit ist das Prozessleitsystem befähigt, Verhaltensmuster von erfahrenen Operatoren in diesem Datensatz zu erkennen und daraus die Regeln zur Erzeugung von Steuersignalen für die Aktuationsmittel aus dem Leitsystem zur Verfügung stehenden Messdaten abzuleiten und den Operator damit vorteilhaft zu ersetzen.

Die Information für diesen Datensatz wird hierbei von erfahrenen menschlichen Operatoren zur Verfügung gestellt. Vorzugsweise beinhaltet dieser Datensatz alle Messdaten, welche dem Operator zur Entscheidung, einen Eingriff in den Prozess vorzunehmen, bewogen haben (d.h. die Datenlage gebildet aus sowohl über Sinne des Operators wahrgenommene Änderungen in der Umgebung des Operators als auch allfällige andere Sensordaten). Es können auch die getätigten Eingriffseingaben (bspw. die neu gesetzten Sollwerte) des Operators in diesen Daten enthalten sein. Diese Eingriffseingaben können hierbei der entscheidungsbegründenden Datenlage zugeordnet sein.

Es ist zudem denkbar, dass das Prozessleitsystem eingerichtet ist, zumindest im Lernmodus Eingaben von einem oder mehreren Operatoren zum Erzeugen von Daten zur Bildung oder Vervollständigung dieses Datensatzes entgegenzunehmen.

Durch seine Sinne dem Operator zur Verfügung stehenden Messdaten können durch käuflich kostengünstig erwerbbare Sensorsysteme gemessen werden, ohne dass robuste und teure Sensoren, wie man sie bspw. für die Messungen der Temperaturverteilung in der Schmelze verwendet, nötig wären, da in prinzipiell durch Menschen begehbaren Umgebungen gemessen werden kann.

Man kann also Signale einer herkömmlichen Videokamera, eines herkömmlichen Mikrophones, eines herkömmlichen Digitalthermometers oder herkömmlicher Beschleunigungssensoren auswerten und erfindungsgemäss dem Prozessleitsystem mit bereits aus dem Stand der Technik bekannten Messparametern zur Verfügung stellen.

Im Allgemeinen sind heutzutage diese Sensorsysteme den menschlichen Sensorsystemen weitaus überlegen. Eine herkömmliche Digitalkamera kann bspw. in einem weiteren Wellenlängenbereich mit einer besseren Auflösung und Empfindlichkeit messen als das menschliche Auge.

Die vorliegende Erfindung umfasst zudem ein Verfahren zur Prozessleitung einer Anlage zur Herstellung und Verarbeitung metallischer Werkstoffe, insbesondere zur Stahlproduktion, wobei die Anlage ein Prozessleitsystem gemäss einem der vorangehenden Ansprüche umfasst und durch wenigstens die folgenden Verfahrensschritte gekennzeichnet ist:
- dass in einem ersten Schritt die Sensordaten durch Auslesen von Signalen der Sensormittel erzeugt werden und aus den Sensordaten Umgebungsdaten aus einer Umgebung der Anlage identifiziert oder allenfalls mittels der Recheneinheit aus den Sensordaten berechnet und jeweils der Recheneinheit als Messdaten zur Verfügung gestellt werden;
- dass in einem optionalen zweiten Schritt mittels der Recheneinheit die aus den Umgebungsdaten und den Sensordaten gebildeten Messdaten mit Sollwerten verglichen werden;
- dass in einem dritten Schritt mittels der Recheneinheit Steuersignale, allenfalls unter Berücksichtigung des Vergleichsergebnisses des vorhergehenden, optionalen zweiten Schritts, mittels der auf der Erfahrung des menschlichen Operators basierenden Regeln erzeugt werden; dass in einem vierten Schritt die Aktuationsmittel gemäss der Steuersignale betätigt werden.

Vorteilhafterweise umfasst das Verfahren weiterhin, dass mittels der Recheneinheit anhand von Rechenmodellen aus den Messdaten Wahrscheinlichkeitswerte eines Eintretens von möglichen Zwischenfällen berechnet werden, und dass die im dritten Schritt mittels der Recheneinheit (allenfalls unter Berücksichtigung des Vergleichsergebnisses des vorhergehenden, optionalen zweiten Schritts) zu erzeugenden Steuersignale unter Berücksichtigung der berechneten Wahrscheinlichkeitswerte erzeugt werden. Es können zudem durch weitere automatische Kontrollsysteme weitere, also ergänzende Steuersignale erzeugt werden.

Die auf der Erfahrung des menschlichen Operators basierenden Regeln können zumindest teilweise oder vollständig als hartkodierte Regeln vorliegend vom Rechensystem verwendet werden.

Zudem kann das erfindungsgemässe in einer Weiterbildung dadurch gekennzeichnet sein, dass die hartkodierten auf der Erfahrung des menschlichen Operators basierenden Regeln zumindest teilweise oder vollständig durch von dem Prozessleitsystem erlernte Regeln ersetzt werden, wobei das Prozessleitsystem im Lernmodus dem menschlichen Operator mehrmals jeweils von der Recheneinheit generierte oder aktuell gemessene oder durch die Recheneinheit allenfalls zuvor abgespeicherte Messdaten, allenfalls einschliesslich der entsprechenden Wahrscheinlichkeitswerte, vorlegt und Anweisungen des Operators über die erste und/oder zweite Benutzerschnittschnelle entgegen nimmt und aufgrund von über die erste Benutzerschnittstelle vom Operator eingegebenen Anweisungen Kontrollsignale erzeugt und aufgrund von über die zweite Benutzerschnittstelle vom Operator eingegebenen Anweisungen simulierte Kontrollsignale erzeugt, wobei diese Signale jeweils mit den dem Operator vorgelegten Daten und diesen zugeordnet als Lemdatensatz abgespeichert werden, und wobei durch die Recheneinheit aus den jeweils derart abgespeicherten Lerndatensätzen die auf der Erfahrung des menschlichen Operators basierenden Regeln zur Auffindung der Kontrollsignale, welche hierbei direkt als Steuersingale versendbar sind, mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen bestimmt und dann im Betriebsmodus angewendet werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine Anlage zur Herstellung und Verarbeitung von Stahl gemäss dem Stand der Technik;
- Fig. 2: zeigt eine Anlage zu Herstellung und Verarbeitung von Stahl mit einem erfindungsgemässen Prozessleitsystem.

### BESCHREIBUNG BEVORZUGTER AUSFÜHRUNGSFORMEN

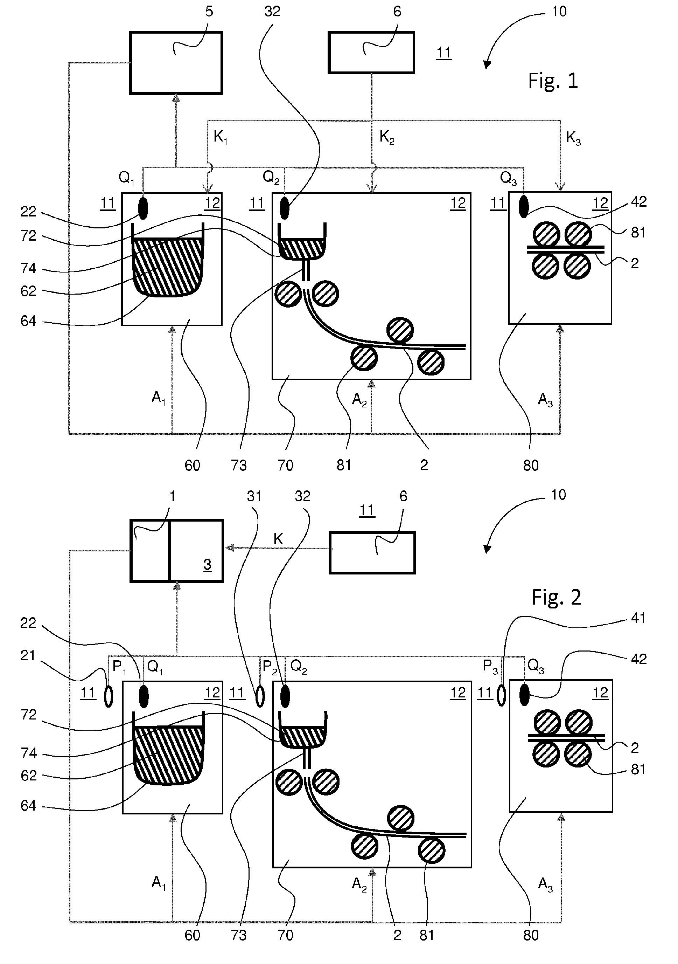

**Figur 1** zeigt eine Anlage 10 zur herkömmlichen Herstellung und Verarbeitung von Stahl mit einem vorbekannten Prozessleitsystem 5. Das Herstellungsverfahren kann bspw. ein Sauerstoffblasverfahren sein. Die Anlage 10 weist beispielhaft einen Reaktorbereich 60, einen Giessbereich 70 und einen Walzbereich 80 auf. Die vorliegende Erfindung ist jedoch nicht auf Anlagen zur Durchführung des Sauerstoffblasverfahrens eingeschränkt, es können auch beliebige andere Herstellverfahren (bspw. ein Herdfrischverfahren) mit dem erfindungsgemässen Prozessleitsystem geleitet werden. Zudem kann das erfindungsgemässe Prozessleitsystem auch nur für einzelne Bereiche einer solchen Anlage eingesetzt werden.

Im Reaktorbereich 60 wird die Metallschmelze 62 zubereitet. Die Reaktorpfanne 64 wird dabei mit den Ausgangsmaterialien (bspw. Roheisen und Schrott) beschickt und bis zum Schmelzen des Pfanneninhalts aufgeheizt. Um die Schmelze 62 dann zu Frischen, wird eine Lanze in die Schmelze 62 getaucht, welche reinen, gasförmigen Sauerstoff in die Eisenschmelze 62 bläst. Dies bewirkt eine Oxidation der Eisenbegleiter (Kohlenstoff, Silizium, Mangan, Schwefel, Phosphor,...). Das Einblasen von Sauerstoff und die Oxidation verursachen eine Durchmischung der Schmelze 62. Durch sekundärmetallurgische Verfahren wird die Schmelze 62 in ein gewünschtes Stahlbad 72 veredelt. Da im Reaktorbereich 60 menschenfeindliche Bedingungen (Hitze, giftige Gase, usw.) herrschen, ist dieser durch einen Operator nicht begehbar, wenn die Anlage 10 im Betrieb ist; beim Reaktorbereich 60 handelt es sich also um eine für den menschlichen Operator nicht begehbare Umgebung 12. Der Operator erhält somit bei einem Kontrollgang in Bereich 11 der Anlage 10 durch die Anlage 10 über seine Sinne nur indirekte Information über den Zustand im Reaktorbereich 60, bspw. über eine Temperatur in der begehbaren Umgebung 11 des unbegehbaren Reaktorbereichs 60 oder über einen Lichtwurf vom Reaktor in den begehbaren Bereich 11. Typischerweise sind im Reaktorbereich 60 eine Vielzahl von Sensoren 22 vorhanden, welche dem Operator und/oder einem entsprechenden automatischen Kontrollsystem 5 Sensordaten Q₁ liefern. Die fertige Schmelze 72 kann dann aus der Pfanne 64 abgestochen und mittels einer Giesspfanne 74 aus dem Reaktorbereich 60 in den Giessbereich 70 transportiert werden. Im Giessbereich 70 wird das Stahlbad 72 mittels einer Kokille 74 in eine gewünschte Form gegossen, wobei ein zumindest teilweise festkörperförmiges Stahlprodukt 2 über Walzen 81, bspw. über Dreipunktbiegung, geformt und richtungsbestimmt abgeführt wird. Hierbei treten im Giessbereich 70 ebenfalls bspw. derart hohe Temperaturen auf, dass dieser nicht durch einen Operator begehbar ist. Beim Giessbereich 70 handelt es sich somit auch um eine nicht menschlich begehbare Umgebung 12, welcher von einem begehbaren Bereich 11 zumindest teilweise umschlossen ist.

Dem Giessbereich 70 schliesst sich ein Walzbereich 80 an, in welchem der Stahl 2 mittels Walzen 81 umgeformt wird. Auch dieser Bereich 80 ist nicht unmittelbar menschlich begehbar (da dieser aus Sicherheitsgründen abgedeckt ist und ebenfalls hohe Temperaturen herrschen) und zumindest teilweise von einem begehbaren Bereich 11 umschlossen.

Der Operator kann also auf seinem Kontrollgang in eine durch eine Wirkung von Vorgängen im Giessbereich 70 oder im Walzbereich 80 beeinflusste und begehbare Umgebung 11 des Giessbereichs 70 bzw. des Walzbereichs 80 gehen und mittels seiner menschlichen Sinne dort indirekt Informationen über den Prozess im Giessbereich 70 bzw. im Walzbereich 80 erhalten. Zudem sind typischerweise eine Vielzahl von Sensoren 32 im Giessbereich 70 bzw. eine Vielzahl von Sensoren 42 im Walzbereich 80 vorgesehen. Diese Sensoren 32, 42 liefern dem Operator und/oder dem automatischen Kontrollsystem 5 den Giessbereich 70 betreffende Sensordaten Q₂ bzw. den Walzbereich 80 betreffende Sensordaten Q₃. Aufgrund dieser Sensordaten Q₂, Q₃ regelt der Operator und/oder das Leitsystem 5 den Prozess im Giessbereich 70 bzw. im Walzbereich 80, wobei dem Operator zusätzlich im Vergleich zum Leitsystem 5 zum Regeln noch seine Sinneseindrücke vorliegen.

Der Operator kann diese Sensordaten Q₁, Q₂, Q₃ allenfalls auch über einen Benutzerinterface des Leitsystems 5 oder über ein anderes Display einsehen und allenfalls aufgrund seiner Erfahrung unter Berücksichtigung aller ihm vorliegender Information überein eine Kontrolleinheit 6 korrigierend in den automatisch geregelten Prozess eingreifen.

Es versteht sich, dass für jeden Bereich 60, 70, 80 auch eines oder mehrere separate Prozessleitsysteme 5 vorgesehen sein können.

Gemäss dem Stand der Technik sind also in den einzelnen Bereichen 60, 70, 80 jeweils Sensoren 22, 32, 42 vorgesehen. Diese Sensoren 22, 32, 42 messen Parameter (Temperatur, Flussgeschwindigkeit, Druck, Dichte, Abstrahlungsintensität oder - helligkeit, usw.) und liefern dem Operator Sensordaten Q₁, Q₂, Q₃. Typischerweise leitet der Operator den Herstellungsprozess aufgrund seiner Erfahrung unter Berücksichtigung der Sensordaten Q₁, Q₂, Q₃ und unter Berücksichtigung von Informationen, welche er über seine menschlichen Sinne wahrnimmt. Der Operator kann hierbei von automatischen Kontrollsystemen 5, welche aufgrund der ihnen vorliegenden Sensordaten Q₁, Q₂, Q₃ Steuersignale A₁, A₂, A₃ erzeugen, unterstützt werden. Aus dem Stand der Technik ist bekannt, dass diese Steuersignale A₁, A₂, A₃ mittels von mathematischen Prozessnachbildungen (statischen, dynamischen oder statistischen Modellen) aus den Sensordaten Q₁, Q₂, Q₃ erzeugt werden. Ein Regelkreis besteht hier also aus dem Prozessleitsystem 5, den Sensoren 22, 32, 42 und den Aktuationsmitteln. Das aus dem Stand der Technik bekannte Leitsystem 5 vergleicht die Sensordaten Q₁, Q₂, Q₃ mit zuvor vom Fachmann gesetzten Sollwerten S und erzeugt mittels statischer, dynamischer oder statistischer Modelle Steuersignale A₁, A₂, A₃ zur Aktuation der Aktuationsmittel zur Annäherung der Sensorwerte Q₁, Q₂, Q₃ an die Sollwerte S.

Zum korrigierenden Eingriff in den Prozess durch den Operator ist die Kontrollkonsole 6 vorgesehen, welche Kontrollanweisungen des Operators entgegennimmt und als Kontrollsignale K₁, K₂, K₃ entweder direkt oder über das Steuersignale A₁, A₂, A₃ produzierende Prozessleitsystem 5 an die Aktuationsmittel der Anlage 10 schickt.

Mit seinen menschlichen Sinnen registriert der Operator bspw. eine Umgebungstemperatur, welche er durch seine Haut fühlt, Vibrationen von Boden, Wänden oder Teilen der Anlage 10, welche er über seinen Körper wahrnimmt, optische Eindrücke, welche er von der Anlage über seine Augen erhält, akustische Eindrücke, welche er über seine Ohren aufnimmt oder auch Gerüche, welche er über die Nase wahrnimmt. Der Operator nimmt bei seinen Kontrollgängen oder auch beim Aufenthalt im Kontrollraum solche Sinnesinformationen von der Anlage 10, von einzelnen Teilen 60, 70, 80 der Anlage 10 bzw. deren Umgebungen 11 auf. Hierbei kommt es also darauf an, wo sich der Operator zu einer bestimmten Zeit aufhält. Dabei macht ein Operator seine Kontrollgänge naturgemäss nur in begehbaren Bereichen oder Umgebungen 11 der Anlage 10 oder deren Teile 60, 70, 80 und nimmt mit seinen Sinnen Informationen aus diesen Umgebungen 11 auf. Es versteht sich, dass auch ein Kontrollraum des Operators eine solche Umgebung 11 ist. Kontrollgänge sind also nicht zwingend erforderlich. Der Operator hält sich zumindest zeitweise in den begehbaren Umgebungen 11 auf, wobei er aufgrund seiner Sinneseindrücke und allenfalls der Sensordaten Q₁, Q₂, Q₃ erfahrungsgemäss sinnvolle Korrektureingriffe definiert, welche der Operator dann über die Kontrolleinheit 6 vornimmt.

Zudem werden die Sensordaten Q₁, Q₂, Q₃ zumindest teilweise von dem einen bekannten automatischen Kontrollsystem 5 automatisch geregelt (es können auch mehrere Kontrollsysteme 5 sein). Dieses Kontrollsystem 5 regelt den Prozess jedoch insbesondere ohne die Information, welche dem Operator aufgrund seiner Sinne zur Verfügung stehen. Der Operator regelt die Anlage 10 also aufgrund von Informationen, welche zumindest teilweise nur ihm in der vorliegenden Form vorliegen. Damit hat der Operator eine essentielle Funktion und kann in den Anlagen des Standes der Technik nicht ersatzlos wegrationalisiert werden.

**Figur 2** zeigt die Anlage gemäss Fig. 1 umfassend die entsprechenden Bereichen 60, 70, 80 und mit einem erfindungsgemässen Prozessleitsystem 1. Auch hier stellen Sensoren 22, 32, 42 Sensordaten Q₁, Q₂, Q₃ zur Verfügung, wobei zusätzliche Messmittel 21, 31, 41 vorgesehen sind, welche einer Recheneinheit 3 Umgebungsdaten P₁, P₂, P₃ bereitstellen. Die Messdaten P₁, P₂, P₃, Q₁, Q₂, Q₃ bestehen hier also aus Daten, welche direkt von den Sensormitteln 21, 22, 31, 32, 41, 42 geliefert werden und aus den Umgebungsdaten P₁, P₂, P₃ und den Sensordaten Q₁, Q₂, Q₃ bestehen.

Es ist nun ein grundlegender Erfindungsgedanke, den als "menschliches Prozessleitsystem" zu sehenden Operator (er sammelt über seine Sinne Daten, welche er erfahrungsgemäss analysiert und entsprechend über Kontrollkonsole 6 den Prozess regelt) durch ein automatisches Prozessleitsystem 1 zu ersetzen. Hierbei soll also die Information, welche gemäss dem Stand der Technik nur dem Operator durch seine Sinne zur Verfügung steht, mittels konventioneller Messmittel 21, 31, 41 gewonnen und dem Prozessleitsystem 1 zur Verfügung gestellt werden. Dabei kann das Prozessleitsystem 1 eingerichtet sein, durch die Messmittel 21, 31, 41 aus Umgebungen 11 gelieferte Daten, sog. Umgebungsdaten P₁, P₂, P₃ allenfalls unter Berücksichtigung der Sensordaten Q₁, Q₂, Q₃ ähnlich einem menschlichen Operator zu verarbeiten und entsprechende Steuersignale A₁, A₂, A₃ erzeugen zu können.

In einer bevorzugten Ausführungsform des erfindungsgemässen Prozessleitsystems 1 für eine Anlage 10 zur Herstellung und Verarbeitung metallischer Werkstoffe, insbesondere zur Stahlproduktion, umfasst das Prozessleitsystem 1 als Sensormittel 21, 22, 31, 32, 41, 42 Sensoren 22, 32, 42 zur Erfassung von Sensordaten Q₁, Q₂, Q₃ und die Messmittel 21, 31, 41 zur Erfassung der Umgebungsdaten P₁, P₂, P₃ im Zusammenhang mit der Herstellung und Verarbeitung metallischer Werkstoffe.

Die Umgebungsdaten P₁, P₂, P₃ stammen hierbei aus einer Umgebung 11, welche von einem menschlichen Operator prinzipiell begehbar ist, während die Anlage 10 in Produktionsbetrieb ist. Die Umgebungsdaten P₁, P₂, P₃ beruhen zudem auf Messparametern, welche durch den Operator mittels seiner menschlichen Sinne erfassbar sind.

Die Sensoren 22, 32, 42 zur Erfassung der Sensordaten Q₁, Q₂, Q₃ sind hierbei vorzugsweise in einer der vom menschlichen Operator nicht begehbaren Umgebungen 12, 60, 70, 80 angebracht und stellen die Sensordaten Q₁, Q₂, Q₃ aus diesen Umgebungen 12, 60, 70, 80 bereit.

Das Prozessleitsystem 1 umfasst weiter eine Recheneinheit 3, welche eingerichtet ist, die Umgebungsdaten P₁, P₂, P₃ und die Sensordaten Q₁, Q₂, Q₃ der Sensormittel 21, 22, 31, 32, 41, 42 entgegen zu nehmen und, allenfalls mit Sollwerten S zu vergleichen und rechnerisch, allenfalls unter Berücksichtigung eines Vergleichsergebnisses, Steuersignale A₁, A₂, A₃ zu erzeugen.

Die Recheneinheit 3 verfügt weiter über vorzugsweise computerimplementierte, vorbestimmte und auf der Erfahrung des Operators basierende Regeln, aufgrund welcher die Steuersignale A₁, A₂, A₃ rechnerisch durch die Recheneinheit 3 aus durch die Umgebungsdaten P₁, P₂, P₃ und die Sensordaten Q₁, Q₂, Q₃ gebildeten Messdaten Q₁, Q₂, Q₃, P₁, P₂, P₃ erzeugbar sind.

Die Sensoren 22, 32, 42 sind jedoch nicht zwingend, sie können in einer anderen Ausführungsform auch weggelassen werden.

Zudem stellt das Leitsystem 1 Aktuationsmittel bereit, welche über die Steuersignale A₁, A₂, A₃ zur Betätigung der Anlage 10 ansteuerbar sind.

Zur rechnerischen Erzeugung der Steuersignale A₁, A₂, A₃ kann das Prozessleitsystem 1 dann Regeln folgen, welche es dem System 1 erlauben, den menschlichen Operator zu imitieren und damit zu ersetzen. Diese Regeln basieren auf der Erfahrung von menschlichen Operatoren und bilden den Entscheidungsprozess des Operators ab. Der Entscheidungsprozess ist der Prozess, mittels welchem der Operator aufgrund von ihm vorliegenden Daten zur Entscheidung zur allfälligen Durchführung eines Kontrolleingriffs gelangt. Der Recheneinheit 3 liegen hierbei diese Regeln als hartkodiertes Programm vor. Die Regeln für das hartkodierte Programm können aus dem Erfahrungsschatz von einem oder mehreren erfahrenen Operatoren zusammengestellt und von einem Fachmann in die Recheneinheit 3 implementiert werden.

In einer Weiterbildung können diese Regeln direkt von mit der Recheneinheit 3 interagierenden, erfahrenen menschlichen Operatoren lernen. Hierzu wird das Prozessleitsystem 1 dann von einem Betriebsmodus in einen Lernmodus geschaltet (s. unten).

Die Messmittel 21, 31, 41 sind hierbei ausgewählt aus der Gruppe bestehend aus: einer Kamera zur Detektion elektromagnetischer Strahlung, insbesondere von sichtbarem Licht; einem Mikrophon zur Detektion akustischer Signale, insbesondere von Schallwellen mit Frequenzen von etwa 20 Hertz bis 20 Kilohertz; einem Thermometer zur Messung einer Oberflächentemperatur oder einer Umgebungstemperatur, insbesondere von Temperaturen zwischen etwa -10 Grad Celsius und 100 Grad Celsius; und einem Beschleunigungssensor zur Detektion von Vibrationen der Anlage 10 oder von durch die Anlage 10 verursachten Vibrationen, insbesondere Vibrationen mit Frequenzen von etwa 0.05 Hertz bis 100 Kilohertz.

Diese Messmittel 21, 31, 41 sind bspw. in der Kontrollkabine oder entlang von Wegen verteilt, auf welchen ein Operator typischerweise seinen Kontrollgang durch die Anlage 10 beschreitet. Diese Messmittel 21, 31, 41 können auch in nicht begehbaren Umgebungen 12 angebracht sein. Diese Messmittel 21, 31, 41 messen jedenfalls Wirkungen der Anlage 10 auf ihre begehbaren Umgebungen 11 (vorzugsweise direkt; alternativ ist es denkbar, dass aus den Daten der Messmittel 21, 31, 41 die Umgebungsdaten P₁, P₂, P₃ errechnet werden.). Bspw. kann eine Kamera das sichtbare Licht vom Hochofen von der Kontrollkabine aus filmen. Es ist zudem denkbar, dass diese Kamera auch UV-Licht oder Infrarotlicht misst. Der Recheneinheit 3 liegt dann eine vom Operator vorgegebene Regel zur Verarbeitung dieser Daten vor. Als weiteres Beispiel kann ein Mikrophon die für den Menschen in der Kabine hörbare Lärmemission messen. Ein Operator weiss, wo welche Messmittel 21, 31, 41 dann anzubringen sind (insbesondere welche Umgebungstemperaturen mittels von Temperatursensoren und/oder welche Umgebungsgerüche mittels von chemischen Sensoren ("künstlicher Nase") erfasst werden sollen).

In einer weiteren Ausführungsform der Erfindung (nicht in den Zeichnungen dargestellt) stehen der Recheneinheit 3 nur Sensoren 22, 32, 42 zur Verfügung, welche nicht direkt Messparameter aus einer der Umgebungen 11 messen, sondern Messparameter aus prinzipiell nicht begehbaren Umgebungen 12 messen und entsprechende Sensordaten Q₁, Q₂, Q₃ bereitstellen. Es ist dann vorgesehen, dass die Umgebungsdaten P₁, P₂, P₃ aufgrund von anlagespezifischen Rechenregeln aus den Sensordaten Q₁, Q₂, Q₃ berechnet werden. Diese anlagespezifischen Rechenregeln können bspw. mittels von Testmessungen oder aufgrund von Erfahrungswerten von erfahrenen Mitarbeitern definiert und durch einen Fachmann mathematisch formuliert und dann bspw. in Form von Algorithmen der Recheneinheit 3 zur Verfügung gestellt werden. Zudem sind auch Ausführungsformen von der Erfindung umfasst, welche die Umgebungsdaten P₁, P₂, P₃ teilweise direkt aus Messmitteln 21, 31, 41 und teilweise rechnerisch mittels der Recheneinheit 3 aus den Sensordaten Q₁, Q₂, Q₃ erhalten. Somit kann eine Anlage 10 optimiert werden und es kann allenfalls auf Sensoren 22, 32, 42 zurückgegriffen werden, welche für standardmässig automatisierte Prozesse bereits vorhanden sind.

Bei einer vorteilhaften Weiterbildung der oben genannten Ausführungsformen des Prozessleitsystems 1 kann dessen Recheneinheit 3 Wahrscheinlichkeitswerte W der Wahrscheinlichkeit des Eintretens bestimmter Stör- oder Zwischenfälle berechnen und bei der rechnerischen Erzeugung der Steuersignale A₁, A₂, A₃ berücksichtigen. Die Recheneinheit ist also eingerichtet, anhand von Rechenmodellen aus den Messdaten P₁, P₂, P₃, Q₁, Q₂, Q₃ die Wahrscheinlichkeitswerte W für ein Eintreten von möglichen Störfällen zu berechnen und die Steuersignale A₁, A₂, A₃ rechnerisch aufgrund der Messdaten P₁, P₂, P₃, Q₁, Q₂, Q₃ und der berechneten Wahrscheinlichkeitswerte W zu erzeugen.

So kann bspw. die Erfahrung des Operators zeigen, dass eine bestimmte Maschine bei Lärmemissionen in bestimmten Frequenzen und Amplituden fehlerhaft funktioniert und daher bald ausfallen wird, bspw. wegen exzentrischer Rotation eines Motors. Als Reaktion kann dann die Drehzahl dieses Motors reduziert und/oder zur Reparatur des Motors aufgefordert werden.

Als weiteres Beispiel kann der Operator durch Wahrnehmung eines bestimmten Geruchs erkennen, dass ein Brennelement am Überhitzen ist und die Betriebstemperatur reduzieren und/oder die Energiezufuhr ausschalten und/oder zum Auswechseln des Elements auffordern.

Als weiteres Beispiel kann der Operator aufgrund der Körnigkeit sehen, dass das Metall-Scrap-Gemisch mit zuviel Scrap (Steine, ...) versehen ist, worauf er dann weiss, dass eine bestimmte Maschine (z.B. ein Rührwerk) nicht zuverlässig funktionieren wird; es wird Alarm geschlagen.

Grundsätzlich kann das Prozessleitsystem 1 zudem weiter ein oder mehrere herkömmliche automatische Kontrollsystem umfassen. Diese Kontrollsysteme sind eingerichtet, die Sensordaten Q₁, Q₂, Q₃ der Sensoren 22, 32, 42 oder Daten von zusätzlichen anderen Sensoren zumindest teilweise entgegen zu nehmen und daraus mittels Modellrechnung einen Teil der Steuersignale A₁, A₂, A₃ bereitzustellen. Diese Kontrollsysteme können unabhängig vom Prozessleitsystem 1 arbeitend sein, wobei die den Kontrollsystemen zur Verfügung stehenden Sensordaten vorteilhafterweise auch der Recheneinheit 3 zur Verfügung stehen, insbesondere dann, wenn die vorbestimmten und auf der Erfahrung des Operators basierende Regeln diese Sensordaten als Inputparameter vorsehen. Das ist zumindest dann der Fall, wenn der Operator bei seinen Entscheidungen diese Daten berücksichtigt hätte.

In einer bevorzugten Weiterbildung ist eine Kontrolleinheit 6 mit einer ersten Benutzerschnittstelle 7 vom Prozessleitsystem 1 umfasst. Diese Kontrolleinheit 6 ist eingerichtet, über die erste Benutzerschnittstelle 7 Kontrollanweisungen vom menschlichen Operator entgegenzunehmen und daraus Kontrollsignale K zu erzeugen. Über diese Kontrollsignale K werden dann die Aktuationsmittel direkt betätigt (sie sind dann auch Steuersignale). Diese Kontrollsignale K können zumindest teilweise auch an die Recheneinheit 3 gesendet werden, wobei die Recheneinheit 3 dann eingerichtet ist, die Steuersignale A₁, A₂, A₃ rechnerisch aufgrund sowohl der Messdaten P₁, P₂,P₃,Q₁, Q₂, Q₃, allenfalls einschliesslich der berechneten Wahrscheinlichkeitswerte W, als auch der zugesendeten Kontrollsignale K zu erzeugen.

Der Operator regelt bspw. über die Benutzerschnittstelle 7 bei einer bestimmten Mischung und Qualitätsvorgabe einen bestimmten Strom für den Lichtbogenofen oder die Drehgeschwindigkeit (oder Antriebsleistung) des EM-Rührwerks.

In einer weiteren Weiterbildung des Prozessleitsystems 1 ist die Recheneinheit 3 aus einem Betriebsmodus in einen Lernmodus schaltbar, wobei das Prozessleitsystem 1 im Lernmodus zumindest teilweise durch den menschlichen Operator über die Kontrolleinheit 6 und deren Kontrollsignale K kontrollierbar ist. Die Recheneinheit 3 ist weiter eingerichtet, diese Messdaten P₁, P₂, P₃, Q₁, Q₂, Q₃ (allenfalls einschliesslich der Wahrscheinlichkeitswerte W) und diese entgegen genommenen Kontrollsignalen K einander jeweils zugeordnet als Lemdatensatz P₁, P₂, P₃, Q₁, Q₂, Q₃, W, K abzuspeichern. Die Recheneinheit 3 ist weiter eingerichtet, aus einer Vielzahl von derart abgespeicherten Lerndatensätzen P₁, P₂, P₃, Q₁, Q₂, Q₃, W, K die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen zu bestimmen, wobei die Recheneinheit 3 weiter eingerichtet ist, die derart bestimmten Regeln dann im Betriebsmodus verwendbar abzuspeichern.

In einer weiteren Ausführungsform des Prozessleitsystems 1 ist die Recheneinheit 3 ebenfalls aus einem Betriebsmodus in einen Lernmodus schaltbar, wobei in diesem Lernmodus dem menschlichen Operator mehrmals jeweils von der Recheneinheit 3 generierte oder aktuell gemessene oder durch die Recheneinheit 3 allenfalls abgespeicherte Messdaten P₁, P₂, P₃, Q₁, Q₂, Q₃ (allenfalls einschliesslich der entsprechenden Wahrscheinlichkeitswerte W) vorgelegt werden (bspw. über ein Display an der Kontrollkonsole oder einem Computer). Das Prozessleitsystem 1 umfasst hierbei eine zweite Benutzerschnittstelle 8, wobei die Recheneinheit 3 im Lernmodus weiter eingerichtet ist aufgrund der jeweils vorgelegten Messdaten P₁, P₂, P₃, Q₁, Q₂, Q₃ über die zweite Benutzerschnittstelle 8 des Prozessleitsystems 1 vom Operator getätigte simulierte Kontrollanweisungen des Operators entgegen zu nehmen und aus den simulierten Kontrollanweisungen simulierte Kontrollsignale L zu erzeugen. Die Recheneinheit 3 ist weiter eingerichtet, diese dem Operator vorgelegten Messdaten P₁, P₂, P₃, Q₁, Q₂, Q₃ (allenfalls einschliesslich der Wahrscheinlichkeitswerte W) und diese simulierten Kontrollsignale K einander jeweils zugeordnet als Lemdatensatz P₁, P₂, P₃, Q₁, Q₂, Q₃, W, L abzuspeichern und aus diesen jeweils abgespeicherten Lerndatensätzen P₁, P₂, P₃, Q₁, Q₂, Q₃, W, L die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen zu bestimmen. Die Recheneinheit 3 ist weiter eingerichtet, diese derart bestimmten Regeln so abzuspeichern, dass diese dann im Betriebsmodus durch die Recheneinheit 3 verwendbar sind.

Ein erfindungsgemässes Verfahren zur Prozessleitung einer Anlage 10 zur Herstellung und Verarbeitung metallischer Werkstoffe, insbesondere zur Stahlproduktion, umfasst ein Prozessleitsystem 1 in einer oben erwähnten Ausführungsform.

Eine bevorzugte Ausführungsform des Verfahrens umfasst wenigstens die folgenden Verfahrensschritte:
In einem ersten Schritt werden die Sensordaten Q₁, Q₂, Q₃ durch Auslesen von Signalen der Sensormittel 21, 22, 31, 32, 41, 42 erzeugt. Aus diesen Sensordaten Q₁, Q₂, Q₃ werden Umgebungsdaten P₁, P₂, P₃ aus einer Umgebung 11 der Anlage 10 identifiziert, d.h. Daten von obengenannten Messmitteln 21, 31, 41 bestimmt, oder es werden diese Umgebungsdaten P₁, P₂, P₃ allenfalls mittels der Recheneinheit 3 aus den Sensordaten Q₁, Q₂, Q₃ berechnet. Die Umgebungsdaten P₁, P₂, P₃ werden dann der Recheneinheit 3 als Messdaten P₁, P₂, P₃ zur Verfügung gestellt. Damit liegt der Recheneinheit 3 ein spezifischer Datensatz vor, welcher auch von den menschlichen Sinnen des Operators hätte aus den entsprechenden Umgebungen 11 vom Operator aufgenommen und berücksichtigt werden können.
In einem optionalen zweiten Schritt werden mittels der Recheneinheit 3 die aus den Umgebungsdaten P₁, P₂, P₃ und den Sensordaten Q₁, Q₂, Q₃ gebildeten Messdaten P₁, P₂, P₃, Q₁, Q₂, Q₃ (also die gesamthaft vorliegenden aktuellen Daten der Anlage 10) mit den entsprechenden Sollwerten S verglichen. Diese Sollwerte S sind vom Fachmann im Vorfeld gesetzt. Es ist auch denkbar, dass aus mehreren ausgewählten Messdaten P₁, P₂, P₃, Q₁, Q₂, Q₃ ein Vergleichswert gebildet wird, welcher dann mit einem entsprechenden, vordefinierten Sollwert verglichen wird. Es kann also jedem Sensor ein vordefinierter Sollwert zugeschrieben sein, oder es kann aus den Sensordaten bzw. Messdaten von mehreren Sensoren ein Wert gebildet werden, welcher mit einem vordefinierten Sollwert verglichen wird. Zeigt ein Vergleichsergebnis, dass eine hinreichend grosse Differenz zwischen einem aktuellen und dem entsprechenden Sollwert besteht, so wird die Anlage 10 in einem folgenden Schritt durch die Aktuationsmittel geregelt.
In einem dritten Schritt werden mittels der Recheneinheit 3 Steuersignale A₁, A₂, A₃, allenfalls unter Berücksichtigung des Vergleichsergebnisses des vorhergehenden, optionalen zweiten Schritts, mittels der auf der Erfahrung des menschlichen Operators basierenden Regeln erzeugt.
In einem vierten Schritt werden dann die Aktuationsmittel gemäss der Steuersignale A₁, A₂, A₃ betätigt.

Nach einer bevorzugten Weiterbildung des Verfahrens wird mittels der Recheneinheit 3 anhand von Rechenmodellen, welche aus dem Stand der Technik bekannt sind, aus den Messdaten P₁, P₂, P₃, Q₁, Q₂, Q₃ die Wahrscheinlichkeitswerte W eines Eintretens von möglichen Zwischenfällen berechnet. Dabei werden die im dritten Schritt mittels der Recheneinheit 3, allenfalls unter Berücksichtigung des Vergleichsergebnisses des vorhergehenden, optinalen zweiten Schritts, zu erzeugenden Steuersignale A₁, A₂, A₃ unter Berücksichtigung der berechneten Wahrscheinlichkeitswerte W erzeugt.

Vorzugsweise werden hierbei die auf der Erfahrung des menschlichen Operators basierenden Regeln zumindest teilweise oder vollständig als hartkodierte, dem Rechensystem 3 vorliegende Regeln von diesem verwendet.

In einer Weiterbildung kann das Verfahren dadurch gekennzeichnet sein, dass die hartkodierten auf der Erfahrung des menschlichen Operators basierenden Regeln zumindest teilweise oder vollständig durch von dem Prozessleitsystem 1 erlernte Regeln ersetzt werden.

Zum Erlernen von Regeln kann das Prozessleitsystem 1 im Lernmodus dem menschlichen Operator mehrmals jeweils entweder von der Recheneinheit 3 generierte oder aktuell gemessene oder durch die Recheneinheit 3 allenfalls zuvor abgespeicherte Messdaten P₁, P₂, P₃, Q₁, Q₂, Q₃ oder Mischungen davon, allenfalls einschliesslich der entsprechenden Wahrscheinlichkeitswerte W, vorlegen. Hierauf analysiert der Operator die ihm vorliegenden Daten und entscheidet, ob und wie er korrigierend in den Prozess eingreifen würde. Anweisungen des Operators den Eingriff betreffend werden vom Operator sodann über die erste und/oder zweite Benutzerschnittschnelle 7, 8 eingegeben und von der Recheneinheit 3 entgegen genommen. Aufgrund von über die erste Benutzerschnittstelle 7 vom Operator eingegebenen Anweisungen werden Kontrollsignale K erzeugt, welche dann bspw. auch direkt auf die Anlage 10 wirken können. Aufgrund von über die zweite Benutzerschnittstelle 7 vom Operator eingegebenen Anweisungen werden simulierte Kontrollsignale L erzeugt. Diese erzeugten Signale K, L werden dann jeweils mit den dem Operator vorgelegten Daten P₁, P₂, P₃, Q₁ ,Q₂, Q₃, W und diesen zugeordnet und als Lerndatensatz P₁, P₂, P₃, Q₁ ,Q₂, Q₃, K, L, W abgespeichert. Die Recheneinheit 3 kann dann auf diese abgespeicherten Lemdatensätze P₁, P₂, P₃, Q₁ ,Q₂, Q₃, K, L, W zugreifen aus den jeweils derart abgespeicherten Lerndatensätzen P₁, P₂, P₃, Q₁ ,Q₂, Q₃, K, L, W die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen bestimmen. Die so erlernten Regeln im Betriebsmodus zusätzlich zu den hartkodierten oder anstelle dieser angewendet werden. Es können hierbei sowohl hartkodierte Regeln (z.B. "bei zu hoher Temperatur abschalten") wie auch erlernte Regeln (z.B. Stromregelkurve im Verlauf der Zeit für den Lichtbogenofen, dem Operator nachgebildet) gemeinsam angewendet werden. Da es sich bei den meisten Verhaltensweisen des Operators nicht um einfache Rezepte, sondern um ein komplexes Zusammenspiel verschiedener Sinneswahrnehmungen und Erfahrungen handelt, sind in der Praxis insbesondere die erlernten Regeln wichtig.

Es ist denkbar, dass der Operator dem Prozessleitsystem 1 auch direkt Lemdatensätze und seine entsprechenden Kontrollanweisungen bereitstellt.

### BEZUGSZEICHENLISTE

- 1: Prozessleitsystem
- 2: Stahlstrang
- 3: Recheneinheit
- 5: konventionelles Prozessleitsystem
- 6: Kontrollkonsole
- 7: erste Benutzerschnittstelle
- 8: zweite Benutzerschnittstelle
- 10: Produktionsanlage
- 11: begehbare Umgebung von Anlage 10
- 12: nicht begehbare Umgebung von Anlage 10
- 21,31,41: Sensormittel, Messmittel
- 22,32,42: Sensormittel, Sensoren
- 60: Reaktorbereich
- 62: Metallschmelze
- 64: Schmelztiegel
- 70: Giessbereich
- 71,81: Walze
- 72: Fertige Metallschmelze
- 73: Kokille
- 74: Pfanne
- 80: Walzwerk
- A₁,A₂,A₃: Steuersignal
- K: Kontrollsignale
- L: simuliertes Kontrollsignal
- P₁,P₂,P₃: Umgebungsdaten
- Q₁,Q₂,Q₃: Sensordaten
- S: Sollwerte
- W: Wahrscheinlichkeitswerte

## Patentansprüche

1. Prozessleitsystem (1) für eine Anlage (10) zur Herstellung und Verarbeitung metallischer Werkstoffe, insbesondere zur Stahlproduktion, umfassend:
Sensormittel (21,22;31,32;41,42) zur Erfassung von Sensordaten (Q₁;Q₂;Q₃) im Zusammenhang mit der Herstellung und Verarbeitung metallischer Werkstoffe;
eine Recheneinheit (3), welche eingerichtet ist, die Sensordaten (Q₁;Q₂;Q₃) der Sensormittel (21,22;31,32;41,42) entgegen zu nehmen und Steuersignale (A₁;A₂;A₃) zu erzeugen; und
Aktuationsmittel, welche über die Steuersignale (A₁;A₂;A₃) zur Betätigung der Anlage (10) ansteuerbar sind; **dadurch gekennzeichnet,**
**dass** die Recheneinheit (3) eingerichtet ist, aus den Sensordaten (Q₁;Q₂;Q₃) Umgebungsdaten (P₁;P₂;P₃) aus einer Umgebung (11) der Anlage (10) zu erhalten;
wobei diese Umgebung (11) von einem menschlichen Operator prinzipiell begehbar ist, während die Anlage (10) in Produktionsbetrieb ist;
wobei die Umgebungsdaten (P₁;P₂;P₃) auf Messparametern beruhen, welche durch den Operator mittels seiner menschlichen Sinne erfassbar sind;
und wobei der Recheneinheit (3) vorbestimmte und auf der Erfahrung des Operators basierende Regeln vorliegen, aufgrund welcher die Steuersignale (A₁;A₂;A₃) rechnerisch durch die Recheneinheit (3) aus durch die Umgebungsdaten (P₁;P₂;P₃) und die Sensordaten (Q₁;Q₂;Q₃) gebildeten Messdaten (Q₁;Q₂;Q₃;P₁;P₂;P₃) erzeugbar sind.

2. Prozessleitsystem (1) nach Anspruch 1, **dadurch gekennzeichnet, dass** die Sensormittel (21,22;31,32;41,42) Messmittel (21;31;41) zur Erfassung von mittels menschlicher Sinne erfassbarer Messparameter umfassen, wobei diese Messmittel (21;31;41) eingerichtet sind, zumindest teilweise oder vollständig die besagten Umgebungsdaten (P₁;P₂;P₃) aus der prinzipiell vom menschlichen Operator begehbaren Umgebung (11) der Anlage (10) zu erfassen und der Recheneinheit (3) als Messdaten (P₁;P₂;P₃) zur Verfügung zu stellen.

3. Prozessleitsystem (1) nach Anspruch 1 oder 2, **dadurch gekennzeichnet, dass** die Sensormittel (21,22;31,32;41,42) in einer prinzipiell vom menschlichen Operator nicht begehbaren Umgebung (12) bereitgestellte Sensoren (22;32;42) zur Erfassung von Sensordaten (Q₁;Q₂;Q₃) umfassen, wobei diese Sensordaten (Q₁;Q₂;Q₃) der Recheneinheit (3) zur Verfügung stehen und die Recheneinheit (3) eingerichtet ist, aus diesen Sensordaten (Q₁;Q₂;Q₃) die besagten Umgebungsdaten (P₁;P₂;P₃) aus der prinzipiell vom menschlichen Operator begehbaren Umgebung (11) der Anlage (10) zumindest teilweise oder vollständig zu errechnen.

4. Prozessleitsystem (1) nach Anspruch 2 oder 3, **dadurch gekennzeichnet, dass** die Sensormittel (21,22;31,32;41,42) weitere Sensoren (22;32;42) zur Erfassung von Sensordaten (Q₁;Q₂;Q₃) umfassen, wobei diese Sensordaten (Q₁;Q₂;Q₃) der Recheneinheit (3) dann zumindest teilweise als weitere Messdaten (Q₁;Q₂;Q₃) zur Verfügung stehen und vorzugsweise aus einer vom menschlichen Operator nicht begehbaren Umgebung (12) stammen, und dass die Recheneinheit (3) eingerichtet ist, die Steuersignale (A₁;A₂;A₃) rechnerisch aufgrund der durch die Umgebungsdaten (P₁;P₂;P₃) und die Sensordaten (Q₁;Q₂;Q₃) gebildeten Messdaten (P₁;P₂;P₃;Q₁;Q₂;Q₃) zu erzeugen.

5. Prozessleitsystem (1) gemäss Anspruch 4, **dadurch gekennzeichnet, dass** weiter mindestens ein automatisches Kontrollsystem umfasst ist, welches eingerichtet ist, die Sensordaten (Q₁;Q₂;Q₃) der weiteren Sensoren (22;32;42) zumindest teilweise entgegen zu nehmen und daraus mittels Modellrechnung einen Teil der Steuersignale (A₁;A₂;A₃) bereitzustellen.

6. Prozessleitsystem (1) nach einem der vorangehenden Ansprüche, **dadurch gekennzeichnet, dass** die Recheneinheit (3) eingerichtet ist, anhand von Rechenmodellen aus den Messdaten (P₁;P₂;P₃;Q₁;Q₂;Q₃) Wahrscheinlichkeitswerte (W) für ein Eintreten von möglichen Störfällen zu berechnen, und dass die Recheneinheit (3) eingerichtet ist, die Steuersignale (A₁;A₂;A₃) rechnerisch aufgrund der Messdaten (P₁;P₂;P₃;Q₁;Q₂;Q₃) und der berechneten Wahrscheinlichkeitswerte (W) zu erzeugen und wobei das Prozessleitsystem (1) vorzugsweise eingerichtet ist, diese Wahrscheinlichkeitswerte (W) anzuzeigen.

7. Prozessleitsystem (1) nach Anspruch 2, **dadurch gekennzeichnet, dass** die besagten Messmittel (21;31;41) ausgewählt sind aus der Gruppe bestehend aus: einer Kamera zur Detektion elektromagnetischer Strahlung, insbesondere von sichtbarem Licht; einem Mikrophon zur Detektion akustischer Signale, insbesondere von Schallwellen mit Frequenzen von etwa 20 Hertz bis 20 Kilohertz; einem Thermometer zur Messung einer Oberflächentemperatur oder einer Umgebungstemperatur, insbesondere von Temperaturen zwischen etwa -10 Grad Celsius und 100 Grad Celsius; und einem Beschleunigungssensor zur Detektion von Vibrationen der Anlage (10) oder von durch die Anlage (10) verursachten Vibrationen, insbesondere Vibrationen mit Frequenzen von etwa 0.05 Hertz bis 100 Kilohertz.

8. Prozessleitsystem (1) nach einem der vorangehenden Ansprüche, **dadurch gekennzeichnet, dass** eine Kontrolleinheit (6) mit einer ersten Benutzerschnittstelle (7) umfasst ist, wobei die Kontrolleinheit (6) eingerichtet ist, über die erste Benutzerschnittstelle (7) Kontrollanweisungen vom menschlichen Operator entgegenzunehmen und daraus Kontrollsignale (K) zu erzeugen und diese Kontrollsignale (K) zur Ansteuerung direkt den Aktuationsmitteln zu senden oder zumindest teilweise an die Recheneinheit (3) zu senden, wobei die Recheneinheit (3) eingerichtet ist, die Steuersignale (A₁;A₂;A₃) rechnerisch aufgrund sowohl der Messdaten (P₁;P₂;P₃;Q₁;Q₂;Q₃), allenfalls einschliesslich der berechneten Wahrscheinlichkeitswerte (W), als auch der zugesendeten Kontrollsignale (K) zu erzeugen.

9. Prozessleitsystem (1) nach Anspruch 8, **dadurch gekennzeichnet, dass** die Recheneinheit (3) aus einem Betriebsmodus in einen Lernmodus schaltbar ist, wobei das Prozessleitsystem (1) im Lernmodus zumindest teilweise durch den menschlichen Operator über die Kontrolleinheit (6) und deren Kontrollsignale (K) kontrollierbar ist, wobei die Recheneinheit (3) weiter eingerichtet ist, diese Messdaten (P₁;P₂;P₃;Q₁;Q₂;Q₃), allenfalls einschliesslich der Wahrscheinlichkeitswerte (W), und diese entgegen genommenen Kontrollsignalen (K) einander jeweils zugeordnet abzuspeichern und aus diesen abgespeicherten Daten (P₁;P₂;P₃;Q₁;Q₂;Q₃;W;K) die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen zu bestimmen, wobei die Recheneinheit (3) eingerichtet ist, die derart bestimmten Regeln dann im Betriebsmodus verwendbar abzuspeichern.

10. Prozessleitsystem (1) nach Anspruch 9, **dadurch gekennzeichnet, dass** die Recheneinheit (3) eingerichtet ist, im Lernmodus dem menschlichen Operator mehrmals jeweils von der Recheneinheit (3) generierte oder aktuell gemessene oder durch die Recheneinheit (3) allenfalls abgespeicherte Messdaten (P₁;P₂;P₃;Q₁;Q₂;Q₃), allenfalls einschliesslich der entsprechenden Wahrscheinlichkeitswerte (W), vorzulegen, wobei das Prozessleitsystem (1) eine zweite Benutzerschnittstelle (8) umfasst, wobei die Recheneinheit (3) im Lernmodus weiter eingerichtet ist aufgrund der jeweils vorgelegten Messdaten (P₁;P₂;P₃;Q₁;Q₂;Q₃) über die zweite Benutzerschnittstelle (8) des Prozessleitsystems (1) vom Operator getätigte simulierte Kontrollanweisungen des Operators entgegen zu nehmen und aus den simulierten Kontrollanweisungen simulierte Kontrollsignale (K) zu erzeugen, wobei die Recheneinheit (3) weiter eingerichtet ist, diese vorgelegten Messdaten (P₁;P₂;P₃;Q₁;Q₂;Q₃), allenfalls einschliesslich der Wahrscheinlichkeitswerte (W), und diese simulierten Kontrollsignale (K) einander jeweils zugeordnet abzuspeichern und aus diesen jeweils abgespeicherten Daten die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen zu bestimmen, wobei die Recheneinheit (3) eingerichtet diese bestimmten Regeln derart abzuspeichern, dass diese dann im Betriebsmodus durch die Recheneinheit (3) verwendbar sind.

11. Verfahren zur Prozessleitung einer Anlage (10) zur Herstellung und Verarbeitung metallischer Werkstoffe, insbesondere zur Stahlproduktion, wobei die Anlage (10) ein Prozessleitsystem (1) gemäss einem der vorangehenden Ansprüche umfasst, **gekennzeichnet durch** wenigstens die folgenden Verfahrensschritte:
- dass in einem ersten Schritt die Sensordaten (Q₁;Q₂;Q₃) **durch** Auslesen von Signalen der Sensormittel (21,22;31,32;41,42) erzeugt werden und aus den Sensordaten (Q₁;Q₂;Q₃) Umgebungsdaten (P₁;P₂;P₃) aus einer Umgebung (11) der Anlage (10) identifiziert oder allenfalls mittels der Recheneinheit (3) aus den Sensordaten (Q₁;Q₂;Q₃) berechnet und jeweils der Recheneinheit (3) als Messdaten (P₁;P₂;P₃) zur Verfügung gestellt werden;
- dass in einem optionalen zweiten Schritt mittels der Recheneinheit (3) die aus den Umgebungsdaten (P₁;P₂;P₃) und den Sensordaten (Q₁;Q₂;Q₃) gebildeten Messdaten (P₁;P₂;P₃;Q₁;Q₂;Q₃) mit Sollwerten (S) verglichen werden;
- dass in einem dritten Schritt mittels der Recheneinheit (3) Steuersignale (A₁;A₂;A₃), allenfalls unter Berücksichtigung eines Vergleichsergebnisses des vorhergehenden zweiten Schritts, mittels der auf der Erfahrung des menschlichen Operators basierenden Regeln erzeugt werden; und dass in einem vierten Schritt die Aktuationsmittel gemäss der Steuersignale (A₁;A₂;A₃) betätigt werden.

12. Verfahren nach Anspruch 11, **dadurch gekennzeichnet, dass** mittels der Recheneinheit (3) anhand von Rechenmodellen aus den Messdaten (P₁;P₂;P₃;Q₁;Q₂;Q₃) Wahrscheinlichkeitswerte (W) eines Eintretens von möglichen Zwischenfällen berechnet werden, und dass die im dritten Schritt mittels der Recheneinheit (3) allenfalls unter Berücksichtigung des Vergleichsergebnisses des vorhergehenden, optionalen zweiten Schritts, zu erzeugenden Steuersignale (A₁;A₂;A₃) unter Berücksichtigung der berechneten Wahrscheinlichkeitswerte (W) erzeugt werden.

13. Verfahren nach Anspruch 11 oder 12, **dadurch gekennzeichnet, dass** die auf der Erfahrung des menschlichen Operators basierenden Regeln zumindest teilweise oder vollständig als hartkodierte Regeln vorliegend vom Rechensystem (3) verwendet werden.

14. Verfahren nach Anspruch 13, **dadurch gekennzeichnet, dass** die hartkodierten auf der Erfahrung des menschlichen Operators basierenden Regeln zumindest teilweise oder vollständig durch von dem Prozessleitsystem (1) erlernte Regeln ersetzt werden, wobei das Prozessleitsystem (1) im Lernmodus dem menschlichen Operator mehrmals jeweils von der Recheneinheit (3) generierte oder aktuell gemessene oder durch die Recheneinheit (3) allenfalls zuvor abgespeicherte Messdaten (P₁;P₂;P₃;Q₁;Q₂;Q₃), allenfalls einschliesslich der entsprechenden Wahrscheinlichkeitswerte (W), vorlegt und Anweisungen des Operators über die erste und/oder zweite Benutzerschnittschnelle (7,8) entgegen nimmt und aufgrund von über die erste Benutzerschnittstelle (7) vom Operator eingegebenen Anweisungen Kontrollsignale (K) erzeugt und aufgrund von über die zweite Benutzerschnittstelle (7) vom Operator eingegebenen Anweisungen simulierte Kontrollsignale (L) erzeugt, wobei diese Signale (K,L) jeweils mit den dem Operator vorgelegten Daten (P₁;P₂;P₃;Q₁;Q₂;Q₃;W) und diesen zugeordnet als Lerndatensatz (P₁;P₂;P₃;Q₁;Q₂;Q₃;K;L;W) abgespeichert werden, und wobei durch die Recheneinheit (3) aus den jeweils derart abgespeicherten Lerndatensätzen (P₁;P₂;P₃;Q₁;Q₂;Q₃;K;L;W) die auf der Erfahrung des menschlichen Operators basierenden Regeln mittels mindestens einer Technologie ausgewählt aus der Gruppe bestehend aus: einem künstlichen neuronalen Netzwerk, einem genetischen Programm, einem Programm zur Clusteranalyse oder zur Durchführung eines Bayes'schen Verfahrens und ähnlichen Programmen bestimmt und die so erlernten Regeln dann im Betriebsmodus angewendet werden.
